# EUROPEAN PATENT APPLICATION

(11) **EP 1 920 983 A2**
(43) Date of publication of application: **14.05.2008**
(21) Application number: 07120248.5
(22) Date of filing: 08.11.2007
(51) Int. Cl.: B60T 17/00, B60T 17/22, B01D 53/04

(54) **Cartridge life tester**

(30) Priority: 09.11.2006 US 558234
(71) Applicant: Bendix Commercial Vehicle Systems LLC, Elyria, Ohio 44035 (US)
(72) Inventor: Hoffman, Fred, Columbia Station, OH 44028 (US); Quinn, Leonard, Lagrange, OH 44050 (US); Nichols, Randall, Westlake, OH 44145-5080 (US); Taneyhill, David, Grafton, OH 44044 (US); Miller, Justin, Elyria, OH 44035 (US)
(74) Representative: Finnie, Peter John

(57) **Abstract**

A saturation level of moisture and/ or other contaminants is determined in a desiccant material by determining an electrical parameter across the desiccant material. An air dryer includes a housing, a desiccant in the housing, and an electrical contact in the desiccant. A level of at least one of moisture and other contaminants is determined as a function of a n electrical parameter between two electrical contacts of dissimilar materials that electrically contact the desiccant. Alternatively, the level of at least one of moisture and other contaminants is determined as a function of an amount of the reflected light received by the optical sensor from the desiccant.

## Description

### Background to the Invention

The present invention relates to desiccant cartridges. It finds particular application in conjunction with identifying when the desiccant within the cartridge is contaminated to a point where the cartridg e including the desiccant should be replaced and will be described with particular reference thereto. It will be appreciated, however, that the invention is also amenable to other applications.

Air dryers are used in compressed air braking systems of, fo r example, heavy vehicles, to filter water and contaminants out of the compressed air. One way that dryer and cleaner compressed air contributes to improved performance of the braking system is by reducing failure of valves in colder weather as a result of icing.

One type of air dryer uses a desiccant material contained in a cartridge to filter the water and contaminants from the compressed air. The desiccant has a finite life. More specifically, over time, the desiccant becomes sufficiently contaminated and the performance degrades to a point that the cartridge must be replaced.

The present invention provides a new and improved apparatus and method for determining when the desiccant cartridge must be replaced.

### Summary of the Invention

In one aspect of the present invention, it is contempl ated to determine a saturation level of moisture and/ or other contaminants in a desiccant material by determining an electrical parameter across the desiccant material.

In one embodiment, an air dryer includes a housing, a desiccant in the housing, and an electrical contact in the desiccant. A level of at least one of moisture and other contaminants is determined as a function of an electrical parameter between two electrical contacts of dissimilar materials that electrically contact the desiccant.

In another embodiment, an air dryer includes a housing, a desiccant in the housing, and an optical sensor receiving reflected light from the desiccant. A level of at least one of moisture and other contaminants is determined as a function of an amount of the reflected light received by the optical sensor from the desiccant.

### Brief Description of the Drawings

Examples of the present invention will now be described in detail with reference to the accompanying drawings, in which:
**FIGURE 1** illustrates a schematic representation of an air dryer including aspects of a desiccant cartridge in accordance with one embodiment of an apparatus illustrating principles of the present invention;
**FIGURE 2** illustrates a schematic representation of a desiccant cartridge in accordance with a second embodiment of an apparatus illustrating principles of the present invention;
**FIGURE 3** illustrates a schematic representation of a desiccant cartridge in accordance with a third embodiment of an apparatus illustrating principles of the present invention;
**FIGURE 4** illustrates a schematic representation of a desiccant cartridge in accordance with a fourth embodiment of an apparatus illustrating principles of the present invention; and
**FIGURE 5** illustrates a schematic representation of a desi ccant cartridge in accordance with a fifth embodiment of an apparatus illustrating principles of the present invention.

### Detailed Description

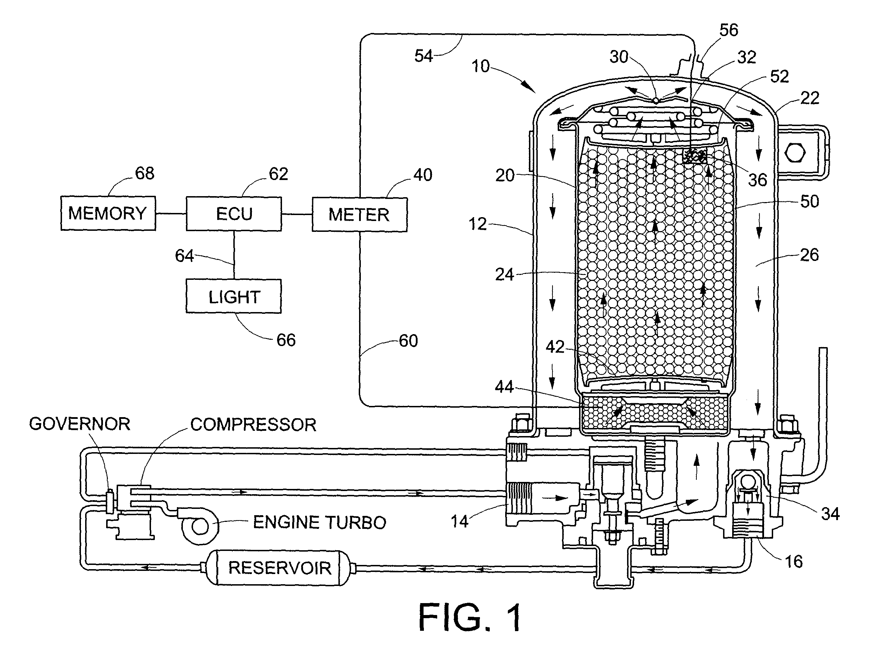

With reference to **FIGURE 1,** an exemplary air dryer **10** is illustrated in accordance with one embodiment of the prese nt invention. The air dryer includes a housing **12,** a supply port **14,** a delivery port **16,** and a desiccant cartridge **20.** The supply port **14** receives compressed air from an external source and provides the compressed air to an interior volume **22** of the housing **12.** The delivery port 16 delivers the compressed air from the interior volume **22** to an exterior of the air dryer **10.** In the illustrated embodiment, the cartridge **20** is removable from the housing **12.** Therefore, the desiccant cartridge **20** may be relatively easily replaced with a new cartridge when, for example, the original cartridge is contaminated with moisture and/ or other contaminants above a predetermined level.

The cartridge **20** encloses a desiccant material **24.** During a charging cycle of the dryer **10,** the compressed air enters the dryer **10** through the supply port **14.** The compressed air is then communicated into the interior volume **22** of the housing **12** by first entering the desiccant cartridge **20.** While in the cartridge **20,** the compressed air passes through the desiccant material **24** as shown by the arrows. The air is cleaned and dried as it passes through the desiccant material **24.** For example, moisture and/or other contaminants (e.g., oil) are trapped in the desiccant cartridge **20** by the desiccant material **24.** The air is then communicated from the desiccant cartridge **20** into a purge volume **26** in the housing **12** via a check valve **30** and an orifice **32.** The cleaned and dried air passes through the purge volume **26** and then exits the housing **12** and the dryer **10** via a check valve **34** and the delivery port **16.** Over time, as more compressed air is cleaned and dried by the desiccant mate rial **24,** the desiccant material **24** in the desiccant cartridge **20** becomes contaminated with oil and, therefore, must be replaced.

A first electrical component **36** (e.g., an electrical contact) is in the desiccant material **24.** The electrical contact **36** is electrically connected to a threshold measuring device such as a meter **40,** which measures an electrical parameter of the contact **36.** In one embodiment, the meter **40** is a comparator. Alternatively, the meter **40** represents an analog input to an ECU **62** that responds to the analog input.

In one embodiment, the electrical contact **36** includes an anode. It is to be understood that the anode **36** is in the desiccant material **24.** A second electrical component **42** (e.g., a cathode) also electrically contacts the des iccant material **24.** In one embodiment, the anode **36** and the cathode **42 are** dissimilar materials (e.g., metals).

When dissimilar metals are immersed in an electrolyte, a voltage potential is self generated between the two materials. The magnitude of the electric potential is proportional to the electronegativity difference of the two materials.
Materials of particular usefulness to the automotive industry include:

| | |
|---|---|
| Magnesium | 1.31 |
| Aluminum | 1.61 |
| Zinc | 1.65 |
| Iron | 1.83 |
| Copper | 1.90 |
| Nickel | 1.91 |
| Tin | 1.96 |
| Lead | 2.33 |
| Carbon | 2.55 |

Magnesium is particularly advantageous for use with other metals because it generates a larger and more easily detected electrical potential. The theoretical voltage between a magnesium anode and a carbon cathode is 2. 55 - 1.31 = 1.24 Volts. However, even the voltage between magnesium and zinc is 1.65 - 1.31 = 0.34 Volts is of useful magnitude for detecting desiccant wetness. Furthermore, magnesium acts as a sacrificial anode and protects metals with greater electronegativity from corrosion by the same mechanism that zinc protects galvanized iron. A battery effect will only work if there is a conductive electrolyte between an anode and a cathode. The desiccant material **24,** when wet, serves as an electrolyte. Therefore, a battery effect is present (and electricity is generated) only if the desiccant material **24** is not dry.

The desiccant material **24** becomes wet as the moisture and/or other contaminants are removed from the compressed air. Furthermore, the wetness of the desiccant material **24** is proportional to a level of the moisture and/ or other contaminants trapped in the desiccant material **24.**

The material of the air dryer **10** housing **12** is non-conductive (e.g., non-conduction painted steel). The desiccant cartridge **20** includes a base portion **44** (e.g., a zinc coated steel plate or a crushed aluminum oil separator), which acts as the cathode **42.** The base portion **44** is not in electrical contact with a wall **50** of the desiccant cartridge **20.** Therefore, in one embodiment in which the anode **36** is a magnesium button fastened to an upper plastic perforated plate **52** in the cartridge **20,** a battery effect is created between the magnesium anode **36** and the cathode **42.** The meter **40** is electrically connected to the anode **36** and the cathode **42** for measuring an electrical parameter between the anode **36** and the cathode **42.** In one embodiment, the electrical parameter is a voltage diff erential between the anode **36** and the cathode **42.** Furthermore, the voltage differential between the anode **36** and the cathode **42** changes as a function of the level of moisture and/or other contaminants in the desiccant material **24.** For example, the voltage differential between the anode **36** and the cathode **42** increases as the level of moisture and/or other contaminants in the des iccant material **24** increases.

A wire **54** (electrical conductor) is electrically and removably connected between the meter **40** and the anode **36.** The wire **54** exits the housing **12** of the air dryer **10** via a fitting **56.** Another wire **60** (electrical conductor) is electrically and removably connected between the cathode **42** and the meter **40.** In this configuration, the meter **40** is electrically connected to both the cathode **42** and the anode **36.** The meter **40** detects the voltage differential between the cathode **42** and the anode **36.**

In one embodiment, the meter **40** electrically communicates with the electronic control module **62** (ECU). The ECU **62** monitors the electrical parameter (e.g., the voltage differential between the anode **36** and the cathode **42).** The ECU **62** also communicates a signal indicating the level of moisture and other contaminants in the desiccant material **24** over a communication line **64** (e.g., a J1939 communication line on a heavy vehicle). In order to indicate a level of saturation of the desiccant material **24,** a dash light **66** illuminates once the amount of the moisture and/or other contaminants exceeds a predetermined level. It is also contemplated that the ECU **62** communicates raw data of the meter readings to a memory device **68** so that historical data of the level of moisture and other contaminants in the desiccant material **24** is available to be analyzed.

Once it is determined that the level of moisture and other contaminants in the desiccant material **24** is above a predetermined level, the anode **36** and the cathode **42** are electrically disconnected from the wires **54, 60.** Then, the desiccant cartridge **20** is removed from the housing **12** and replaced with a new cartridge including desiccant that is less saturated. The new desiccant cartridge is then electrically connected to the anode **36** and the cathode **42** via the wires **54, 60.**

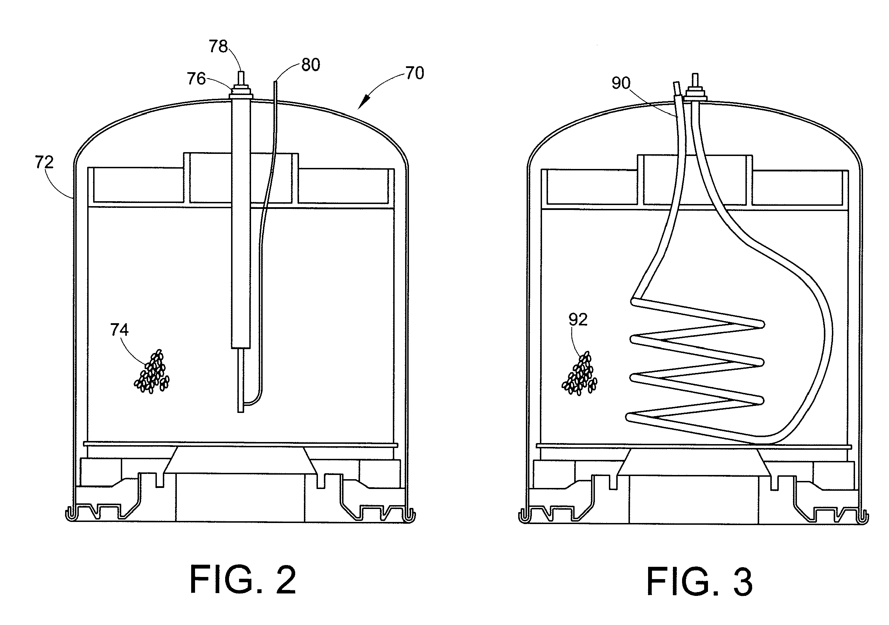

**FIGURE 2** illustrates another exemplary embodiment of the present invention. In this embodiment, the air dryer **70** includes a housing **72** that contains the desiccant material **74.** However, there is not a removable desiccant cartridge, which contains the desiccant material **74,** within the housing **72.** Therefore, once it is determined that the desiccant material **74** is saturated above a predetermined level with moisture a nd/or other contaminants, the entire housing **72** is replaced. Although the embodiment illustrated in **FIGURE 1** illustrates a removable desiccant cartridge within the housing and the embodiment illustrated in **FIGURE 2** illustrates the desiccant material enclosed within a disposable housing, it is to be understood that a removable desiccant cartridge and the disposable housing may be used in either embodiment.

With reference to **FIGURE 2,** an electrical contact **76** includes a probe (e.g., an electrically conductive element) having two terminals **78, 80** extending to the outside of the housing **72.** Although it is not illustrated, it is to be understood that, like the embodiment illustrated in **FIGURE 1,** a meter and/or an ECU are electrically connected to the terminals **78, 80** for measuring the electrical parameter of the contact **76.** In this embodiment, the ECU and/ or meter causes a current to be supplied to the contact **76.** The current causes a resistance to be established in the contact **76,** and the resistance is the electrical parameter determined by the ECU or meter. However, it is to be understood that other methods of determining resistance are also contemplated. Similar to the embodiment illustrated in **FIGURE 1,** the resistance changes as a function of the level of moisture and/or other contaminants in the desiccant material **74.** For example, the resistance of the contact **76** changes as the level of moisture and/or other contaminants in the desiccant material **74** changes.

**FIGURE 3** illustrates another exemplary embodiment of the present invention. With reference to **FIGURE 3,** the probe **90** is illustrated as a coil in the desiccant material **92.** As in the embodiment shown in **FIGURE 2,** the resistance of the coil probe **90** shown in **FIGURE 3** is the electrical parameter determined by the meter.

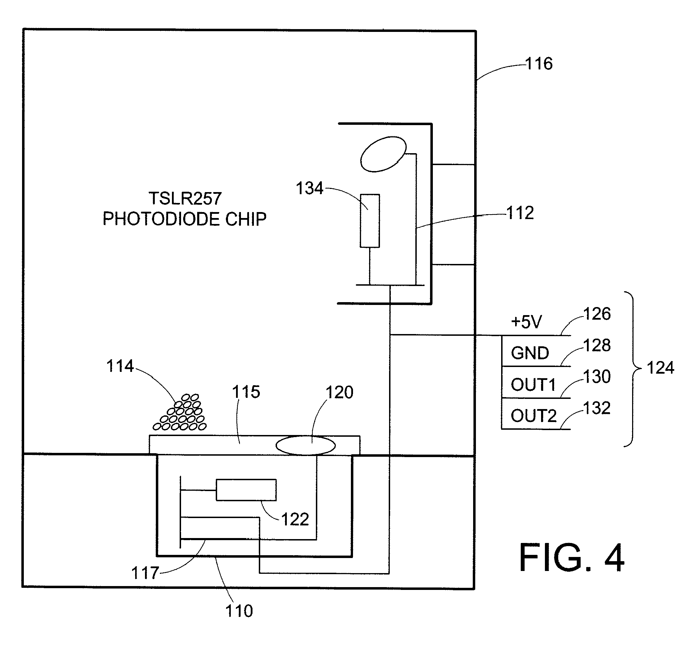

**FIGURE 4** illustrates another exemplary embodiment of the present invention. In this embodiment, first and second electrical components **110, 112,** respectively, (optical sensor dev ices) are mounted in the desiccant material **114** inside the desiccant cartridge **116** and measure light reflected from the desiccant **114.** In the illustrated embodiment, the first optical sensor **110** is positioned substantially vertical in the desiccant **114** an d the second optical sensor **112** is positioned substantially horizontal in the desiccant **114.** Both of the sensor devices **110, 112** include similar components and, therefore, only the first optical sensor **110** will be described in detail.

In one embodiment, the first optical sensor **110** includes a light source **120** (e.g., a light emitting diode (LED)) and a light detector **122** (e.g., a photodiode or photocell) electrically connected by a connector **117.** It is contemplated that the light source **120** is a colored (e.g., red) LED. However, other embodiments including light sources of any other color are also contemplated. An optional window **115** provides an external view of the LED **120** (e.g., to confirm the LED is functioning). The light source **120** directs light on to the desiccant **114** and the detector **122** receives the light from the source **120** that is reflected by the desiccant **114.** The amount of light reflected by the desiccant **114** is indicative of the contamination of the desiccant **114.** For example, as the desic cant **114** becomes more contaminated, less of the light from the source **120** is reflected to the detector **122.** The detector **122** changes an electrical parameter such as voltage as a function of the reflected light received from the desiccant **114.** In addition to, or instead of, monitoring voltage, other parameters that may be monitored include current, inductance, capacitance, conductance, or digital signals. For example, the optical sensor **110** acts as a light-to-voltage sensor that produces a relatively high er voltage when the desiccant **114** is not contaminated and relatively lower voltage when the desiccant **114** is contaminated. An electrical connector **124** on the cartridge **116** provides a pin **126** for supplying power for illuminating the light source **120,** a pin **128** electrically connected to ground, and a pin **130** electrically connected to the detector **122.** The pin **130** transmits the voltage output by the detector **122** to an electrical measuring device (not shown) (e.g., a meter). A pin **132** is electrically connected to a detector **134** of the second optical sensor **112.**

In another embodiment, it is contemplated that the first optical sensor **110** is an integrated circuit chip (e.g., the TAOS chip TRS1722).

Although two optical sensors **110, 112** are illustrated in the desiccant material **114,** it is to be understood that any number of optical sensors (e.g., one (1) optical sensor or more than two (2) optical sensors) are contemplated.

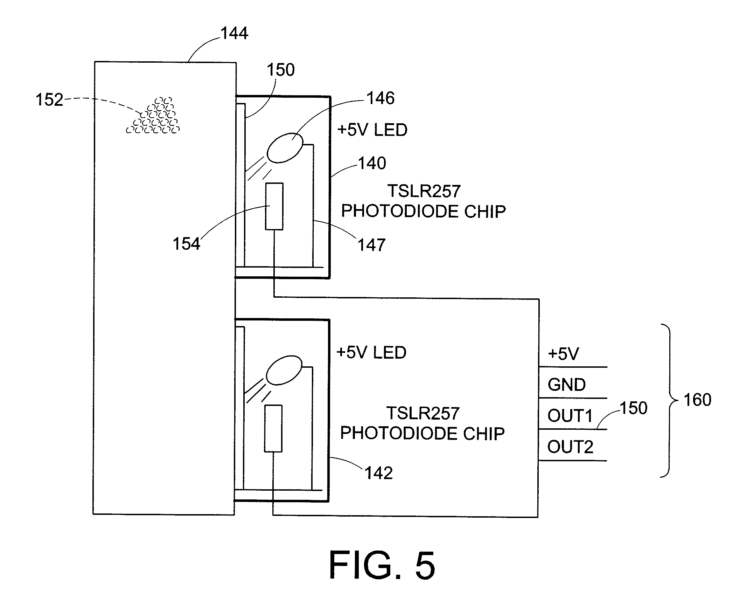

**FIGURE 5** illustrates another exemplary embodiment of the present invention. In this embodiment, first and second optical sensor devices **140, 142,** respectively, are mounted external to the desiccant cartridge **144.** The light from the source **146** (e.g., LED) is transmitted through a window **150** in the cartridge **144** and is reflected by the desicc ant **152** in the cartridge **144.** The reflected light is transmitted back through the window **150** to the detector **154.** As in the embodiment illustrated in **FIGURE 4,** the amount of light reflected by the desiccant **152** is indicative of the contamination of the desiccant **152.** Furthermore, as discussed with reference to the embodiment in **FIGURE 4,** the detector **154** produces a voltage as a function of the reflected light received from the desiccant **152.** The voltage produced by the detector **154,** which is electrically connected to the source **146** via connector **147,** is measured at the pin **156** of the connector **160.** As discussed above with reference to the embodiment illustrated in **FIGURE 4,** it is to be understood that any number of optical sensor devices are contemplate d for the embodiment illustrated in **FIGURE 5.**

## Claims

1. An air dryer, comprising:
a housing;
a desiccant in the housing;
an electrical component for determining a level of at least one of moisture and other contaminants as a function of an electrical parameter.

2. The air dryer as set forth in claim 1, wherein the electrical component includes:
an electrical contact in the desiccant; and
a second electrical contact, the first and second electrical contacts including two dissimilar materials, a level of at least one of moisture and other contaminants being determined as a function of an electrical parameter between the first and second electrical contacts.

3. The air dryer as set forth in claim 1, wherein the electrical component includes:
an optical sensor receiving reflected light from the desiccant, a level of at least one of moisture and other contaminants being determined as a function of an amount of the reflected light received by the optical sensor.

4. The air dryer as set forth in claim 1, wherein the electrical parameter is one of voltage, current, inductance, capacitance, conductance, and digital signals.

5. An air dryer, comprising:
a housing;
a desiccant in the housing;
an electrical contact in the desiccant; and
a second electrical contact, the first and second electrical contacts including two dissimilar materials, a level of at least one of moisture and other contaminants being determined as a function of a voltage differential between the first and second electrical contacts.

6. The air dryer as set forth in claim 5, wherein the electrical contact includes an anode in the desiccant.

7. The air dryer as set forth in claim 5, wherein the first and second electrical contacts include two dissimilar metals.

8. The air dryer as set forth in claim 7, wherein:
the first electrical contact includes an anode; and
the second electrical contact includes a cathode.

9. The air dryer as set forth in claim 8, wherein:
the anode includes magnesium; and
the cathode includes steel.

10. The air dryer as set forth in claim 8, wherein the cathode is a zinc coated steel plate that electrically contacts the housing.

11. The air dryer as set forth in claim 5, wherein:
the electrical contact is a continuous electrically conductive element in the desiccant; and
the level of the at least one of moisture and other contaminants is determined as a function of an electrical resistance of the conductive element.

12. The air dryer as set forth in claim 11, wherein the contact includes two electrically conductive elements outside of the housing.

13. A system for determining a level of at least one of moisture and contaminants in a desiccant material within an air dryer, the system comprising:
an air dryer, including:
a housing;
a desiccant cartridge i n the housing, the cartridge including desiccant material;
an electrical contact in the desiccant material; and
a second electrical contact contacting the desiccant material, the first electrical contact being an anode, the second electrical contact being a cathode, and the anode and the cathode including dissimilar metals, a level of at least one of moisture and other contaminants being determined as a function of a voltage difference between the electrical contacts; and
a meter, electrically connected to the electrical contacts, for measuring and indicating the voltage difference.

14. The system for determining a level of at least one of moisture and contaminants in a desiccant material within an air dryer as set forth in claim 13, wherein the voltage difference changes as the level of at least one of moisture and other contaminants changes.

15. The system for determining a level of at least one of moisture and contaminants in a desiccant material within an air dryer as set forth in claim 13, wherein the anode is magnesium.

16. The system for determining a level of at least one of moisture and contaminants in a desiccant material within an air dryer as set forth in claim 13, wherein the first electrical contact is a coil.

17. The system for determining a level of at least one of moisture and contaminants in a desiccant material within an air dryer as set forth in claim 13, wherein the first electrical contact is removably secured to the meter.

18. A method for replacing a desiccant cartridge as a function of a level of at least one of moisture and contaminants in the desiccant, the method comprising:
determining a level of at least one of the moisture and the other contaminants in the desiccant as a function of a voltage difference across the desic cant; and
replacing the desiccant cartridge as a function of the level of the voltage difference.

19. The method for determining a level of at least one of moisture and contaminants in desiccant within a cartridge as set forth in claim 18, further including:
electrically connecting a first electrical contact in the desiccant to a meter; and
electrically connecting a second electrical contact, which contacts the desiccant, to the meter.

20. The method for determining a level of at least one of moisture and contaminants in desiccant within a cartridge as set forth in claim 19, wherein if the voltage difference is above a predetermined level:
electrically disconnecting the first contact from the meter; and
electrically connecting the meter to a first con tact positioned in a new desiccant cartridge.

21. The method for determining a level of at least one of moisture and contaminants in desiccant within a cartridge as set forth in claim 20, further including:
displaying the voltage difference.

22. The method for determining a level of at least one of moisture and contaminants in desiccant within a cartridge as set forth in claim 18, further including:
determining the voltage difference as a resistance between the electrical contacts.

23. A desiccant cartridge, comprising:
a cartridge housing;
desiccant in the cartridge housing; and
means for determining a level of at least one of moisture and other contaminants in the desiccant.

24. The desiccant cartridge as set forth in claim 23, wherein the means for determining includes:
an electrical contact in the desiccant.

25. The desiccant cartridge as set forth in claim 24, wherein the means for determining also includes:
a threshold measuring device for measuring a resistance of the contact.

26. The desiccant cartridge as set forth in claim 24, wherein the contact includes an electrical probe in the desiccant.

27. The desiccant cartridge as set forth in claim 24, wherein the contact includes:
an anode in the desiccant; and
a cathode electrically contacting both the desiccant and the cartridge housing.

28. The desiccant cartridge as set forth in claim 27, wherein the means for determining also includes:
a meter for measuring a voltage between the anode and the cathode.

29. The desiccant cartridge as set forth in claim 27, wherein:
the anode is magnesium; and
the cathode is zinc coated steel.

30. The desiccant cartridge as set forth in claim 23, wherein the means for determining includes:
an optical sensor.

31. A desiccant cartridge, comprising:
a cartridge housing;
desiccant in the cartridge housing;
an electrical anode in the desiccant; and
an electrical cathode in contact with the desiccant, a level of at least one of moisture and other contaminants being determin ed as a function of an electrical voltage between the anode and the cathode.

32. The desiccant cartridge as set forth in claim 31, further comprising:
electrical conductors connected to the anode and cathode, respectively, that electrically and removably connect with a meter for measuring the voltage.

33. The desiccant cartridge as set forth in claim 31, wherein:
the anode and the cathode are dissimilar metals.

34. A desiccant cartridge, comprising:
a cartridge housing;
desiccant in the cartridge hous ing;
an electrical probe in the desiccant, a level of at least one of moisture and other contaminants being determined as a function of an electrical resistance in the probe.

35. The desiccant cartridge as set forth in claim 34, wherein:
the probe is a coil in the desiccant.

36. An air dryer, comprising:
a housing;
a desiccant in the housing; and
an optical sensor receiving reflected light from the desiccant, a level of at least one of moisture and other contaminants being determined as a function of an amount of the reflected light received by the optical sensor.

37. The air dryer as set forth in claim 36, wherein the optical sensor includes:
a light source for transmitting light to the desiccant; and
a detector receiving the reflected light, a volt age being produced by the detector as a function of the amount of the reflected light received by the detector.

38. The air dryer as set forth in claim 37, wherein:
the light source is a light emitting diode; and
the detector is a photodiode.

39. The air dryer as set forth in claim 36, wherein the optical sensor is in the desiccant.

40. The air dryer as set forth in claim 36, wherein the optical sensor is external to the housing.
